# EUROPÄISCHE PATENTANMELDUNG

(11) **EP 2 461 056 A2**
(43) Veröffentlichungstag der Anmeldung: **06.06.2012**
(21) Anmeldenummer: 11188029.0
(22) Anmeldetag: 07.11.2011
(51) Int. Cl.: F16C 33/36

(54) **Rollenkörper für ein Pendelrollenlager sowie Wälzlager mit diesem**

(30) Priorität: 01.12.2010 DE 102010053140
(71) Anmelder: Schaeffler Technologies AG & Co. KG, 91074 Herzogenaurach (DE)
(72) Erfinder: Schröder, Rainer, 97440 Egenhausen (DE); Godau, Robert, 97422 Schweinfurt (DE)

(57) **Zusammenfassung**

Der Erfindung liegt die Aufgabe zugrunde, die Rollenkörper für ein Pendelrollenlager, für ein Torodiallager oder für ein Tonnenrollenlager zu verbessern. Sowie ein entsprechendes Wälzkörperlager mit verbesserten Rollenkörpern zu entwerfen.

Hierzu wird ein Rollenkörper 1 für ein Pendelrollenlager, für ein Toroidallager oder für ein Tonnenrollenlager vorgeschlagen, wobei der Rollenkörper 1 im Bereich möglicher Kontaktflächen mit einer Laufbahn in Richtung seiner Drehachse 3 einen Mittelabschnitt 8 aufweist an den sich beidseitig ein Endabschnitt 9 anschließt, wobei der Gesamtprofilverlauf 5 des Rollenkörpers in einem Längsschnitt durch die Drehachse 3 durch eine bereichsweise Überlagerung von einem Grundprofilverlauf 6 mit einem Korrekturprofilverlauf 10 gebildet ist, wobei der Grundprofilverlauf 6 in Form eines Kreisabschnitts mit einem Rollenradius R ausgebildet ist, und wobei in dem Bereich der Endabschnitte 9 der Durchmesser Dw des Rollenkörpers 1 im Gesamtprofilverlauf 5 durch die Überlagerung des Korrekturprofilverlaufs 10 gegenüber dem Grundprofilverlauf 6 verringert ist, und wobei in dem Mittelabschnitt 8 der Gesamtprofilverlauf 5 dem Grundprofilverlauf 6 entspricht.

## Beschreibung

Die Erfindung betrifft einen Rollenkörper für ein Pendelrollenlager, für ein Toroidallager oder für ein Tonnenrollenlager, wobei der Rollenkörper im Bereich möglicher Kontaktflächen mit einer Laufbahn in Richtung seiner Drehachse einen Mittelabschnitt aufweist, an dem sich beidseitig ein Endabschnitt anschließt, wobei der Gesamtprofilverlauf des Rollenkörpers in einem Längsschnitt durch die Drehachse durch eine bereichsweise Überlagerung von einem Grundprofilverlauf mit einem Korrekturprofilverlauf gebildet ist, wobei der Grundprofilverlauf in Form eines Kreisabschnitts mit einem Rollenradius ausgebildet ist und wobei in dem Bereich der Endabschnitte der Durchmesser des Rollenkörpers im Gesamtprofilverlauf durch die Überlagerung des Korrekturprofilverlaufes gegenüber dem Grundprofilverlauf verringert ist. Die Erfindung betrifft auch ein Wälzkörperlager mit derartigen Rollenkörpern.

Rollenkörper in einem Wälzlager übertragen radiale bzw. axiale Kräfte von einem Ring zu einem anderen Ring oder - im Fall von Axiallagern - von einer Scheibe zu einer anderen Scheibe. Bei Rollenkörpern erfolgt die Übertragung der Kräfte üblicher Weise nicht punktförmig, sondern es bilden sich Druckellipsen aus, welche sich entlang der Rolle erstrecken. Die Druckellipsen können sich je nach Belastung des Wälzkörperlagers verändern. So kann bei einer geringen Belastung eines Rollenkörpers sich die Druckellipse zunächst nur in einem Mittelbereich des Rollenkörpers erstrecken und sich dann - bei steigender Belastung - bis zu den Enden des Rollenkörpers ausdehnen. Es ist allerdings bekannt, dass es vorteilhaft ist, überhöhte Kantenspannungen an den Endabschnitten der Rollenkörper zu vermeiden, um die Lebensdauer des Wälzkörperlagers nicht unnötig zu verringern.

Bereits die Druckschrift DE 1163612 aus dem Jahre 1959 geht auf diese Problematik ein und schlägt insbesondere mit Blick auf Zylinderrollen als Rollenform vor, ein Profil zu überlagern, welches sich ausgehend von der Mitte der Zylinderrolle zu den Randbereichen stetig ändert. Die eigentliche Zylinderrolle weist somit keinen Bereich mehr auf, der zylinderförmig ist. In einem Nebensatz wird in dieser Druckschrift darauf hingewiesen, dass die offenbarte Lehre nicht allein auf Zylinderrollenlager anwendbar ist, sondern sinngemäß auch für die Kegelrollen der Kegelrollenlager und für die Tonnenrollen der Pendelrollenlager gelten kann.

### Gebiet der Erfindung

Der Erfindung liegt die Aufgabe zugrunde, die Rollenkörper für ein Pendelrollenlager, für ein Torodiallager oder für ein Tonnenrollenlager zu verbessern. Sowie ein entsprechendes Wälzkörperlager mit verbesserten Rollenkörpern zu entwerfen.

Diese Aufgabe wird durch einen Rollenkörper mit den Merkmalen des Anspruches 1 sowie durch ein Wälzkörperlager mit den Merkmalen des Anspruches 8 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird ein Rollenkörper vorgeschlagen, welcher für ein Pendelrollenlager, für ein Torodiallager und/oder für ein Tonnenrollenlager geeignet und/oder ausgebildet ist. Bei den genannten Lagern kann es sich um Radial- oder Axiallager handeln.

Der Rollenkörper ist als ein Wälzkörper ausgebildet, welcher zwischen Ringen oder Scheiben als Laufbahnträger eines Wälzlagers, insbesondere der genannten Art, anordbar ist. Der Rollenkörper ist bevorzugt aus Metall ausgebildet, bei abgewandelten Ausführungsformen kann der Rollenkörper jedoch auch aus einer Keramik oder aus einem Kunststoff ausgebildet sein und/oder einen Überzug aus diesem Material aufweisen oder andersartig beschichtet sein.

Der Rollenkörper weist in Richtung seiner Drehachse oder entlang seiner Länge einen Mittelabschnitt auf, an dem sich beidseitig ein Endabschnitt anschließt. Der Mittelabschnitt und die Endabschnitte bilden mögliche Kontaktflächen zur Übertragung von Kräften zwischen den Ringen oder Scheiben des zugehörigen Wälzlagers. Es handelt sich insbesondere nicht um Stirnseiten des Rollenkörper, welche allenfalls eine Führungsposition übernehmen. Insbesondere bilden die möglichen Kontaktflächen auf der Laufbahn des zugehörigen Wälzlagers bei entsprechender Belastung eine Druckellipse aus.

Der Gesamtprofilverlauf des Rollenkörpers in einem Längsschnitt durch die Drehachse kann durch eine bereichsweise Überlagerung von einem Grundprofilverlauf mit einem Korrekturprofilverlauf gebildet werden. Diese Darstellung dient dazu, die Gestaltung des Rollenkörpers zu verdeutlichen. Es ist jedoch genau so möglich, dass statt der bereichsweisen Überlagerung ein Freiformprofilverlauf verwendet wird, welcher jedoch gedanklich wieder durch die beschriebene, bereichsweise Überlagerung gebildet werden könnte.

Der Grundprofilverlauf ist in Form eines Kreisabschnitts mit einem Rollenradius, insbesondere einem konstanten Rollenradius ausgebildet. Optional anders ausgedrückt, ist der Grundprofilverlauf des Rollenkörpers ballig oder sphärisch ausgebildet.

Im Bereich der Endabschnitte erfolgt jedoch die bereichsweise Überlagerung mit dem Korrekturprofilverlauf, so dass der Durchmesser des Rollenkörpers in den Endabschnitten im Gesamtprofilverlauf gegenüber dem Grundprofilverlauf verringert ist. Somit sind die Endabschnitte des Rollenkörpers im Durchmesser etwas schmaler ausgeführt als es durch den Grundprofilverlauf beschrieben wäre.

Erfindungsgemäß wird vorgeschlagen, dass in dem Mittelabschnitt der Gesamtprofilverlauf dem Grundprofilverlauf entspricht. In dem Mittelabschnitt wird der Gesamtprofilverlauf somit durch den Kreisabschnitt mit dem Rollenradius definiert und/oder nicht durch den Korrekturprofilverlauf geändert oder beeinflusst.

Der Erfindung liegt die Überlegung zugrunde, dass die Durchmesserverkleinerung in den Endabschnitten tatsächlich die auftretenden Kantenspannungen verringert und somit einen vorteilhaften Effekt für die Lebensdauer des Wälzkörperlagers hat. Allerdings führt die aus dem Stand der Technik angedeutete Änderung des Grundprofilverlaufes in dem Mittelbereich des Rollenkörpers dazu, dass gerade bei geringen Belastungen des Wälzkörperlagers der Mittelabschnitt bei den Rollenkörpern oder die korrespondierenden Bereiche auf der Laufbahn besonders stark belastet werden, da die Kontaktfläche stark vermindert ist. Berechnungen haben überraschender Weise gezeigt, dass die Gesamtlebensdauer eines Wälzkörperlagers mit einem erfindungsgemäßen Rollenkörper verbessert werden kann, indem der Mittelabschnitt unverändert den Grundprofilverlauf trägt und nur die Endabschnitte durch Überlagerung des Korrekturprofil-verlaufs im Durchmesser verringert sind.

Bei einer bevorzugten Ausführungsform der Erfindung erstreckt sich der Mittelabschnitt mit dem unveränderten Grundprofilverlauf über mindestens 50 % der Rollenlänge, vorzugsweise über mindestens 80 % der Rollenlänge und insbesondere sogar über mindestens 90 % der Rollenlänge. Damit erstrecken sich die Endabschnitte über weniger als 25%, vorzugsweise weniger als 10% und insbesondere weniger als 5% der Rollenlänge. Unter der Rollenlänge wird wahlweise die Gesamtlänge des Rollenkörpers von einer Stirnfläche zur gegenüberliegenden Stirnfläche oder die Ausdehnung des Rollenkörpers entlang seiner Drehachse oder der Bereich der möglichen Kontaktflächen als effektive Rollenlänge gewählt. Diese Ausführungsform unterstreicht nochmals die erfinderische Idee, den Mittelabschnitt unverändert zu lassen und die bereichsweise Überlagerung des Korrekturprofilverlaufs nur in den Endabschnitten wirken zu lassen.

Mit dem Ziel, Belastungsspitzen bei dem Übergang zwischen dem Mittelabschnitt und dem Endabschnitt zu vermeiden, ist der Gesamtprofilverlauf vorzugsweise so ausgebildet, dass dieser Übergang stetig, differenzierbar und/oder mit einem tangentialen Übergang erfolgt.

Der Korrekturprofilverlauf kann bei bevorzugten Ausführungsformen der Erfindung als ein Radiusverlauf mit einem konstanten Radius oder als ein logarithmischer Verlauf ausgebildet sein. Insbesondere ist vorgesehen, dass die Durchmesserdifferenz zwischen dem Grundprofilverlauf und dem Gesamtprofilverlauf in Richtung der Enden des Rollenkörpers betragsmäßig monoton oder sogar streng monoton steigt.

Bei einer bevorzugten konstruktiven Auslegung der Erfindung ist der Korrekturprofilverlauf so gewählt, dass bei einer Normalbelastung des Rollenkörpers die maximale Druckbelastung im Endabschnitt kleiner oder nicht mehr als 10 % größer als die maximale Druckbelastung in dem Mittelabschnitt ist. Unter der Normalbelastung wird vorzugsweise ein P/C-Bereich gemäß DIN ISO 281, Beiblatt 2 größer als 0,1, vorzugsweise größer als 0,15 und/oder kleiner als 0,4, vorzugsweise kleiner als 0,3 verstanden, wobei C der dynamischen Tragzahl in [N] und P der dynamischen äquivalenten Belastung in [N] entspricht.

Bislang haben nämlich bei Rollenkörpern die Kantenspannungen Probleme bereitet, welche bei üblicher Auslegung des Rollenkörpers an den Kanten in Form von Druckspitzen deutlich größer als die maximale Druckbelastung in dem Mittelabschnitt waren. Die Druckspitzen konnten die maximale Druckbelastung im Mittelabschnitt beispielsweise um mehr als 30 % und insbesondere um mehr als 40 % bezogen auf die Druckbelastung im Mittelabschnitt überragen und führten aus diesem Grund zu einer deutlichen Reduzierung der berechneten Lebensdauer. Dagegen wird bei der bevorzugten konstruktiven Auslegung der Korrekturprofilverlauf so gewählt, dass die Druckbelastungen im Endabschnitt im Bereich der maximalen Druckbelastung in dem Mittelabschnitt sind. Die Gesamtdruckbelastung wird gleichmäßig oder gleichmäßiger über die gesamte Rollenlänge verteilt, was letztlich zu der Erhöhung der berechneten Lebensdauer führt.

Trotzdem kann besonders bevorzugt vorgesehen sein, dass in dem genannten Normalbelastungsbereich oder in einem Teilbereich davon die Druckbelastung im Endabschnitt ein lokales Maximum bildet. Grafisch betrachtet sehen die beidseitigen lokalen Maxima wie Hörner oder Ohren in der Druckverteilung aus. Besonders bevorzugt sind die lokalen Maxima kleiner als das globale Maxima, welches durch die maximale Druckbelastung im Mittelabschnitt gebildet ist. In dieser bevorzugten Weiterbildung wird sichergestellt, dass die Druckellipse in den Endabschnitten vollständig ausgeprägt ist und somit die Gesamtbelastung gleichmäßig über die Rollenlänge verteilt ist.

Bei einer möglichen konstruktiven Ausgestaltung für Rollenkörper mit einer Rollenlänge zwischen 15 mm und 60 mm, insbesondere 400 mm und einem maximalen Rollendurchmesser zwischen 10 mm und 40 mm, insbesondere 210 mm ist es bevorzugt, dass die Differenz zwischen dem Gesamtprofilverlauf und dem Grundprofilverlauf in der Mitte der Endabschnitte zwischen 0,002 mm und 0,1 mm, vorzugsweise zwischen 0,008 mm und 0,03 mm beträgt. Diese Angaben gelten bevorzugt für Rollenkörper aus Metall, insbesondere aus Stahl und im speziellen aus Wälzkörperstahl.

Ein weiterer Gegenstand der Erfindung betrifft ein Wälzkörperlager, welches durch eine Mehrzahl von Rollenkörpern nach einem der vorhergehenden Ansprüche gekennzeichnet ist. Vorzugsweise weist das Wälzkörperlager mindestens eine Wälzkörperreihe ausschließlich mit derartigen Rollenkörpern oder sogar ausschließlich derartige Rollenkörper auf. Das Wälzkörperlager kann sowohl als Radiallager mit Außenring und Innenring als auch als ein Axiallager mit einer ersten und zweiten Scheibe als Laufbahnträger ausgebildet sein. Insbesondere ist das Wälzkörperlager als Rotorlager oder ein Turmlager in einer Windkraftanlage ausgebildet.

Das Wälzkörperlager ist bevorzugt als ein Pendelrollenlager, Toroidallager oder ein Tonnenrollenlager ausgebildet. Das Pendelrollenlager ist insbesondere zweireihig ausgebildet und weist einen Außenring mit hohlkugeliger Laufbahn auf. Das Tonnenrollenlager ist bevorzugt als ein einreihiges Rollenlager ausgebildet, wobei der Außenring ebenfalls eine hohlkugelige Laufbahn aufweist. Das Toroidallager ist ebenfalls bevorzugt einreihig, wobei sowohl der Innenring als auch der Außenring hohlkugelig ausgebildet sind.

Bei einer bevorzugten Weiterbildung der Erfindung ist mindestens eine der Laufbahnen des Wälzkörperlagers in einem Schnitt senkrecht zur Laufrichtung der Rollenkörper als Kreisabschnitt oder Kreissegment mit einem Laufbahnradius ausgebildet, wobei das Verhältnis von Rollenradius zu Laufbahnradius, welches üblicher Weise auch als Schmiegung bezeichnet wird, zwischen 0,9 und 1 beträgt.

Im Rahmen der Erfindung ist es sogar möglich, dass die Schmiegung für mindestens eine Laufbahn, vorzugsweise für den Außenring, größer als 0,98, vorzugsweise größer als 0,99 gewählt ist. Im Stand der Technik wird ein derartig kleiner Schmiegungswert üblicherweise nicht gewählt, da es durch die daraus resultierende Verringerung des Zwischenspalts zwischen Laufbahn und Rollenkörper zu Kantenspannungen in den Randbereichen kommen kann. Dagegen wird durch den Einsatz der erfindungsgemäßen Rollenkörper bereits erreicht, dass die Kantenspannungen und Spannungsüberhöhungen verkleinert sind, so dass in Abgrenzung zu den sonst üblichen Maßnahmen ein besonders hoher Schmiegungswert verwendet werden kann. Durch den hohen Schmiegungswert ist auch bei geringen Belastungen des Wälzkörperlagers die Kontaktfläche zwischen Rollenkörper und Laufbahn ausgesprochen groß, sodass die Beanspruchung der Laufbahn gering und daraus resultierend die Lebensdauer des gesamten Wälzkörperlagers hoch ist.

Weitere Merkmale, Vorteile und Wirkungen der Erfindung ergeben sich aus der nachfolgenden Beschreibung eines bevorzugten Ausführungsbeispiels der Erfindung. Dabei zeigen:
- Figur 1: eine schematische Draufsicht auf einen Rollenkörper als ein erstes Ausführungsbeispiel der Erfindung;
- Figur 2: eine Detailvergrößerung eines oder des Rollenkörpers aus der Figur 1;
- Figur 3: ein weiteres Ausführungsbeispiel eines Rollenkörpers;
- Figur 4: eine weitere Darstellung einer möglichen Ausführungsform des Rollenkörpers;
- Figur 5: ein erster Graph zur Beschreibung des Korrekturprofilverlaufs der vorhergehenden Rollenkörper;
- Figur 6: in ähnlicher Darstellung wie die Figur 5 ein ähnlicher Graph;
- Figur 7: ein Graph zur Illustration der Druckbelastung eines oder des Rollenkörpers gemäß der Erfindung;
- Figur 8: zwei Graphen zum Vergleich der Effekte bei einer erfindungsgemäßen Profilierung und einer Gesamtprofilierung von Rollenkörpern;
- Figur 9: ein Graph in ähnlicher Darstellung wie in der Figur 8, welcher bei einem anderen Rollenkörper unterschiedliche Belastungszustände zeigt;
- Figur 10: ein Graph zur Darstellung der maximalen Druckbelastung zwischen Rollenkörper und Laufbahn bei verschiedenen Belastungszuständen.

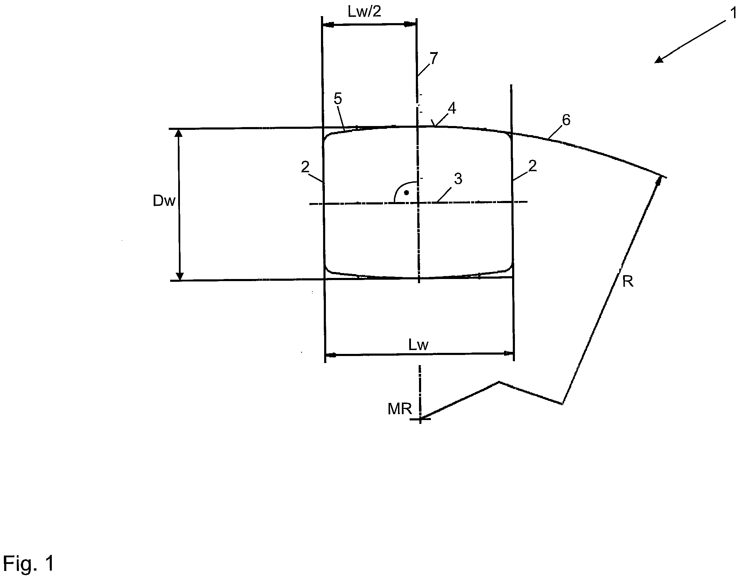

Die Figur 1 zeigt in einer schematischen seitlichen Draufsicht, die auch einer Längsschnittansicht entspricht, einen Rollenkörper 1, wie dieser in Pendelrollenlager, Toroidallager und/oder Tonnenrollenlager eingesetzt werden kann. Die Lager können als Axiallager oder Radiallager ausgebildet sein. Der Rollenkörper 1 ist üblicher Weise aus Metall, z.B. Stahl, insbesondere Wälzkörperstahl, ausgebildet und weist einen Rollenlänge Lw von 20 mm bis 400 mm auf. Die Rollenlänge Lw ist der Abstand zwischen den Stirnseiten 2 des Rollenkörpers 1. Der maximale Rollendurchmesser wird mit Dw bezeichnet und beträgt üblicher Weise 10 mm bis 210 mm. Im Betrieb rotiert der Rollenkörper 1 um eine Drehachse 3.

Die Lauffläche 4 des Rollenkörpers 1, welche im Betrieb mit Laufbahnen des Lagers in Kontakt treten kann, weist in der gezeigten Seitenansicht bzw. Schnittansicht einen Gesamtprofilverlauf 5 auf, welcher in der Grobform - wie er in der Figur 1 nur schematisiert dargestellt ist - durch einen Grundprofilverlauf 6 gebildet ist, wobei der Grundprofilverlauf 6 durch einen Kreisabschnitt gebildet ist bzw. einem Kreisbogen entspricht, der durch einen Rollenradius R definiert ist. Der Mittelpunkt des Rollenradius MR liegt außerhalb des Rollenkörpers 1 und in diesem Beispiel auf einer Mittellinie 7, welche senkrecht zu der Drehachse 3 angeordnet ist und den Rollenkörper 1 symmetrisch teilt.

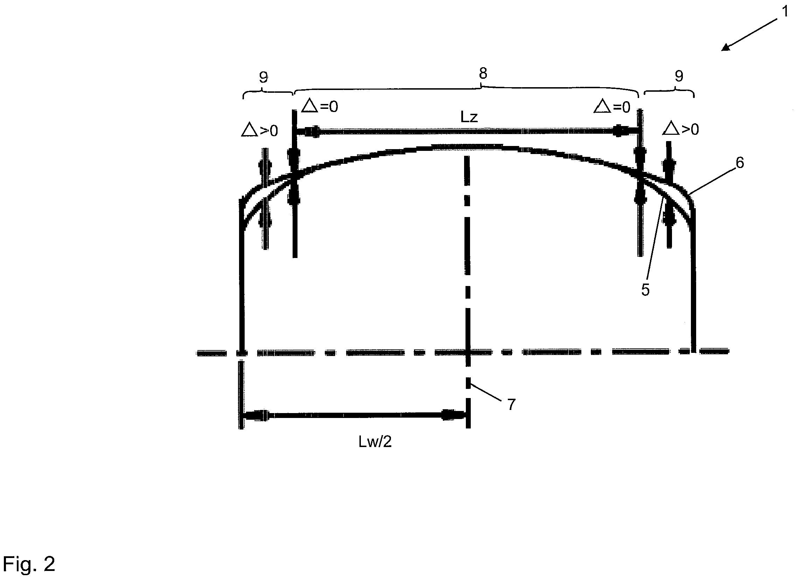

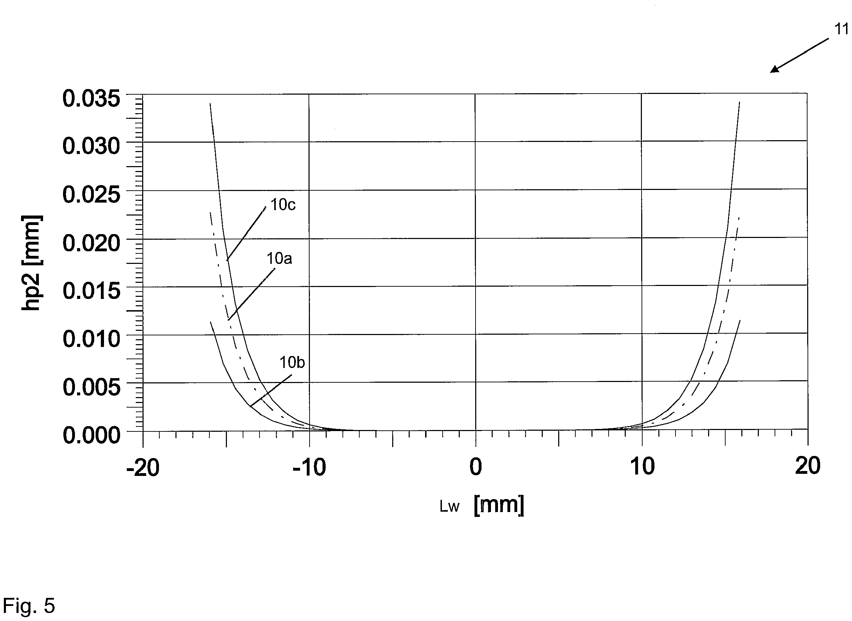

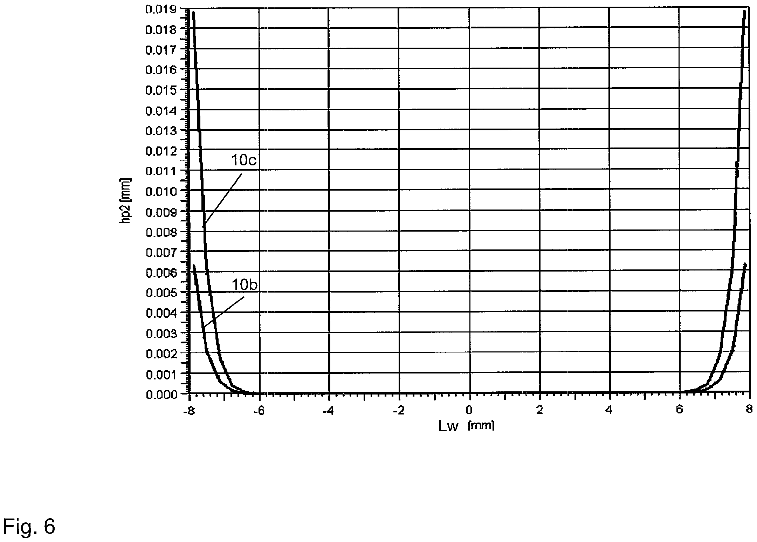

Die Figur 2 zeigt eine schematisierte Vergrößerung des Rollenkörpers 1 in der Figur 1, wobei zeichnerisch überlagert der Grundprofilverlauf 6 und der Gesamtprofilverlauf 5 dargestellt ist. Während in einem Mittelabschnitt 8 des Rollenkörpers 1 mit der Länge Lz der Gesamtprofilverlauf 5 und der Grundprofilverlauf 6 identisch (delta=0) sind, weichen diese beiden Profilverläufe in den Endabschnitten 9 voneinander (delta>0) ab. Der Mittelabschnitt 8 erstreckt sich in diesem Beispiel über mehr als 80% der Rollenlänge Lw. Mathematisch betrachtet kann der Übergang von dem Grundprofilverlauf 6 in den Gesamtprofilverlauf 5 durch Anwendung eines Korrekturprofilverlaufs 10 (Figuren 5, 6) dargestellt werden. Im Ergebnis ändert sich durch die Anwendung des Korrekturprofilverlaufes 10 auf den Grundprofilverlauf 6 zur Bildung des Gesamtprofilverlaufes 5 der Rollenkörper 1 so, dass der Durchmesser des Rollenkörpers 1 in den Endabschnitten 9 bei dem Gesamtprofilverlauf 5 kleiner (delta>0) als bei dem Grundprofilverlauf 6 ist.

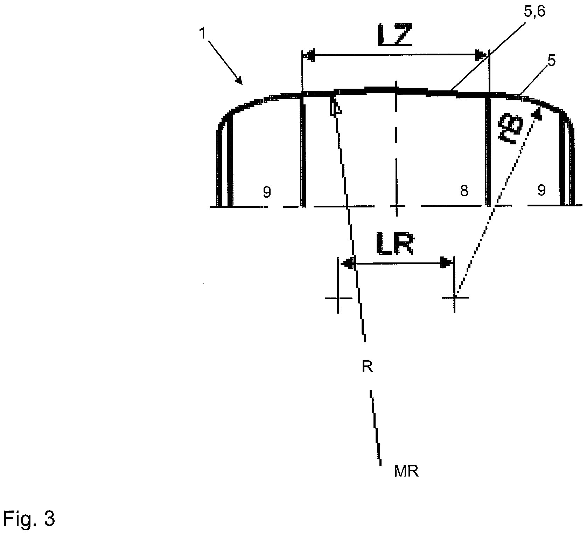

Die Figur 3 zeigt eine mögliche Ausführungsform des Gesamtprofilverlaufs 5, wobei in dem Mittelabschnitt 8 wieder der Grundprofilverlauf 6 mit dem Radius MR gegeben ist, die Randbereich 9 jedoch um einen Korrekturprofilverlauf 10 (ähnlich zu der Figur 5, 6) so verringert sind, dass sich ein sphärischer Profilverlauf ausbildet, welcher durch einen Radius rB beschreibbar ist. Die Mittelpunkte des Radius rB der beiden Endabschnitte 9 liegen parallel zu der Drehachse 2 um einen Betrag LR voneinander beabstandet. Der Übergang des Gesamtprofilverlaufes 5 zwischen Mittelabschnitt 8 und Endabschnitt 9 ist tangential gewählt, so dass sich keine Druck-überhöhungen bei Belastungen des Rollkörpers 1 ergeben.

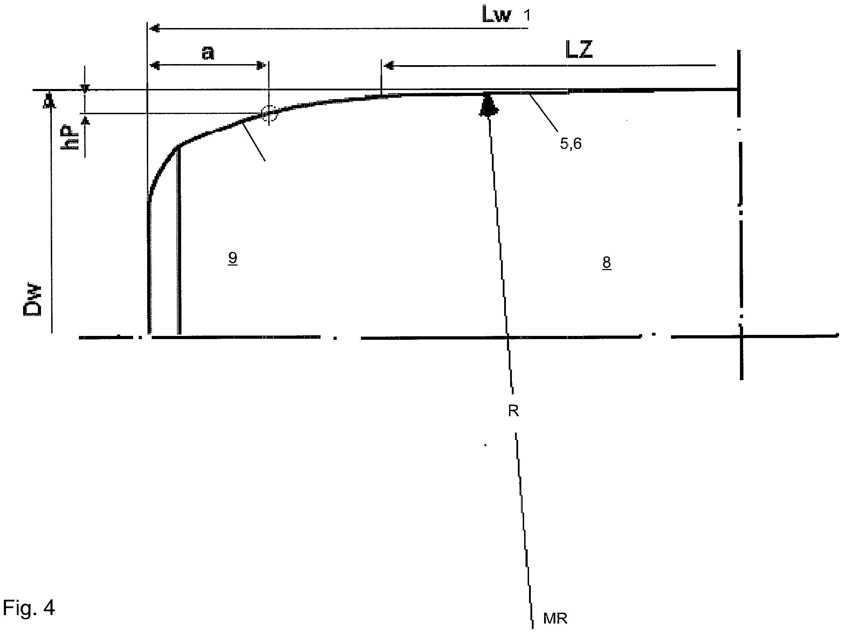

In der Figur 4 ist ein anderes Beispiel für einen Rollenkörper 1 dargestellt, der in analoger Weise zu dem Rollenkörper in der Figur 1 beschriftet ist. In den Endabschnitten 9 ist der Gesamtprofilverlauf 5 als ein logarithmischer Profilverlauf ausgebildet.

In der Figur 5 ist ein Graph 11 dargestellt, bei dem auf der x-Achse die Länge Lw des Rollenkörpers 1 und auf der y-Achse ein möglicher Korrekturprofilverlauf 10 in mm aufgetragen ist. In dem Graph 11 ist zu erkennen, dass der Korrekturprofilverlauf 10 in einem Bereich zwischen - 8 mm und + 8 mm den Wert 0 einnimmt. Dieser Bereich entspricht somit dem Mittelabschnitt 8. In den zu den Endabschnitten 9 korrespondierenden Bereichen, die sich ca. von + 8 mm bis + 15 mm bzw. - 8 mm bis - 15 mm erstrecken, nimmt der Korrekturprofilverlauf 10 in einer Mittellinie 10a Werte bis 22 µm, in einer Minimallinie 10 b Werte bis 12 µm und bei einer Maximallinie 10 c Werte bis 35 µm ein. Ca. in der Mitte der zu den Randabschnitte 9 korrespondierenden Bereichen beträgt der Wert des Korrekturprofilverlaufs 10 weniger als 5 µm. Der Mittellinie 10a des Korrekturprofilverlaufs 10 beschreibt dabei eine vorgegebene Auslegung, die Linien gemäß 10 b und 10 c stellen mögliche Schwankungsbreiten dar. Neben der idealen Überlagerung kann es auch zu ergänzenden Fertigungstoleranzen kommen.

In der Figur 6 ist ein anderes Ausführungsbeispiel für einen Korrekturprofilverlauf 10 dargestellt, wobei jedoch nur die bereichsbegrenzenden Korrekturprofilverläufe 10 b und 10 c dargestellt sind. Bei diesem Ausführungsbeispiel erstreckt sich der zu dem Mittelabschnitt 8 korrespondierende Bereich von - 6 mm bis + 6 mm, wohingegen die zu den Endabschnitten 9 korrespondierenden Bereiche sich nur von + 6 mm bis + 8 mm bzw. - 6 mm bis - 8 mm erstrecken. In dem zu dem Mittelabschnitt 8 korrespondierenden Bereich ist der Wert des Korrekturprofilverlaufs 10 wieder 0, in den zu den Endabschnitten 9 korrespondierenden Bereichen ist der maximale Wert 6 µm bzw. 19 µm und der Wert in der Mitte des Endabschnittes kleiner als 2 µm.

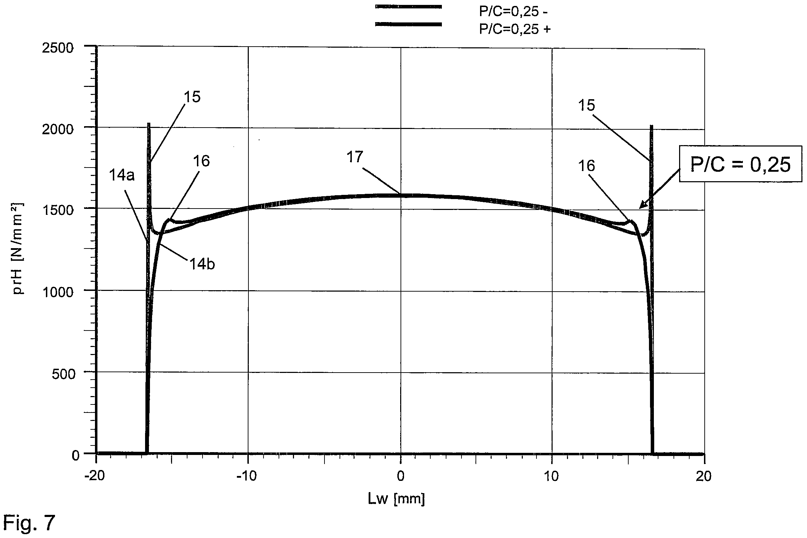

Die Figur 7 belegt exemplarisch den Nutzen des Gesamtprofilverlaufs 5 eines Ausführungsbeispiels eines erfindungsgemäßen Rollenkörpers 1 im Gegensatz zu einem Standard-Rollenkörper mit einem Grundprofilverlauf 6 von einer Seitenfläche zur nächsten Seitenfläche. Auf dem Graph 13 ist auf der x-Achse wieder die Rollenlänge Lw und auf der y-Achse eine Flächenpressung in N/mm² aufgetragen. Als Belastungssituation wurde ein Zustand gewählt, bei dem der Wert P/C 0,25 beträgt, wobei auf die zuvor beschriebene Definition verwiesen wird. Während die Pressungsverteilung 14 a des Standard-Rollenkörpers mit einem durchgängigen Grundprofilverlauf 6 in den Randbereichen deutliche Spannungsspitzen 15 zeigt, welche zu Drucküberhöhungen in den Kantenbereichen und somit zu einer Verringerung der Lebensdauer des Lagers führen, zeigt die Pressungsverteilung des erfindungsgemäßen Rollenkörpers 1 in ähnlichen Bereichen nur geringe lokale Maxima 16, welche sogar kleiner als ein globales Maximum 17 der Pressungsverteilung 14 b ausgeführt sind. Mit der erfindungsgemäßen Ausgestaltung des Rollenkörpers 1 können somit effektiv Kantenbelastungen vermindert werden und auf diese Weise die Lebensdauer des Lagers erhöht werden. In der Beschriftung bedeutet ein "+" einen erfindungsgemäßen Gesamtprofilverlauf 5 und "-" einen durchgehenden Grundprofilverlauf 6 ohne Überlagerung eines Korrekturprofil-verlaufs 10.

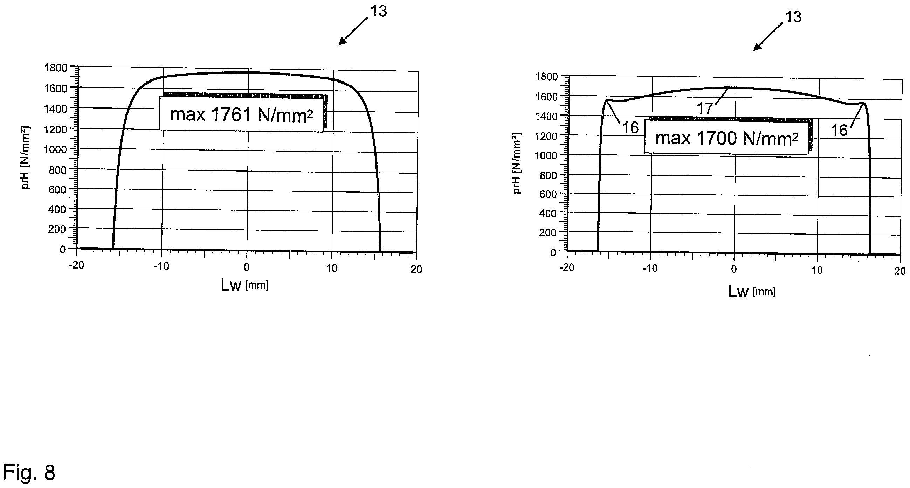

In der Figur 8 sind in gleicher Auftragung wie in der Figur 7 zwei Graphen 13 bei einem P/C-Wert= 0,3 dargestellt, die in gleicher Weise wie der vorhergehende Graph 13 beschriftet wurde, wobei der linke Graph den Fall eines Standard-Rollenkörpers zeigt, bei dem eine zusätzliche Profilierung entlang der gesamten Rollenlänge Lw erfolgt ist, so dass auch im Mittelabschnitt 8 von dem Grundprofilverlauf 6 abgewichen wurde. Die Spannungsverteilung zeigt ein globales Maximum von 1761 N/mm². Auf der rechten Seite ist dagegen ein Graph 13 von einem Rollenkörper 1 dargestellt, der die gleichen Abmessungen wie der Standard-Rollenkörper aufweist, jedoch einen erfindungsgemäßen Gesamtprofilverlauf 5 aufweist. Zum einen sind hier wieder die lokalen Maxima 16 zu erkennen, die wieder kleiner als globale Maximum 17 ausgeprägt sind. Das globale Maximum 17 erreicht hier einen rechnerischen Wert von 1700 N/mm². Der Unterschied von mehr als 60 N/mm² bei der Maximalbelastung führt zu einem überproportionalen Anstieg der berechneten Lebensdauer des Lagers bei dem erfindungsgemäßen Rollenkörper 1 im Vergleich zu dem Standard-Rollenkörper.

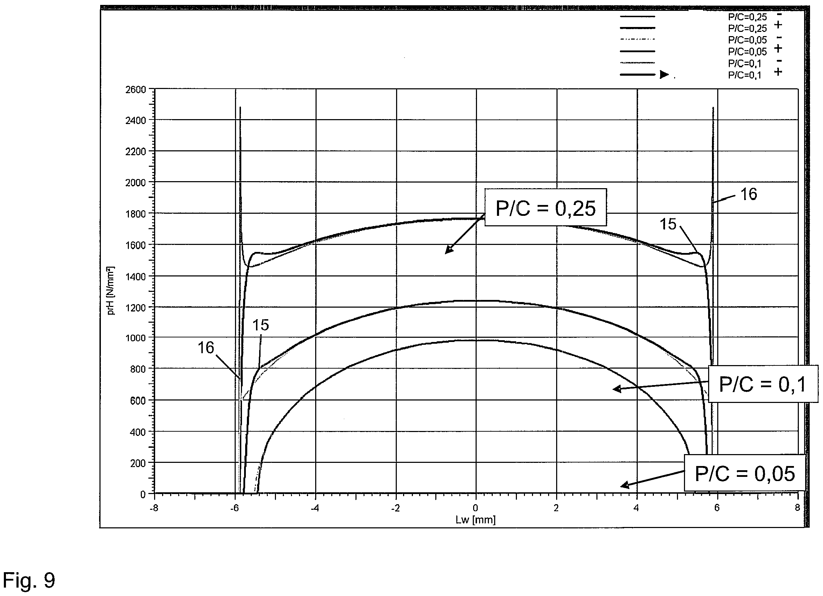

In der Figur 9 ist für einen anderen Rollenkörper 1 die Druckverteilung bzw. Pressungsverteilung dargestellt, jedoch bei verschiedenen P/C-Werten. Verglichen wurden wieder Standard-Rollenkörper (-) mit Rollenkörper 1 (+) als Ausführungsbeispiele der Erfindung. In dieser Gesamtdarstellung ist nochmals zu erkennen, dass bei einem P/C-Bereich = 0,25 durch die erfindungsgemäße Ausgestaltung der Rollenkörper 1 die Spannungsspitzen oder Kantenüberhöhungen 15 deutlich vermindert werden können und nur noch lokale Maxima 16 bilden, wie dies insbesondere bei P/C-Werten von 0,25 zu sehen ist. Auch bei einem P/C-Bereich bei 0,1 sind diese Vorteile der Reduzierung der Kantenüberhöhung 15 noch zu erkennen. Bei einem P/C-Wert von 0,05 ist die Pressungsverteilung von einem erfindungsgemäß profilierten Rollenkörper 1 und einem Rollenkörper mit Grundprofilverlauf 6 nahezu verschwunden, was den Vorteil hat, dass auch der erfindungsgemäß profilierte Rollenkörper 1 die gesamte Breite des Rollenkörpers 1 zur Übertragung von Kräften bei niedriger Belastung nutzt und auf diese Weise auch in diesem Belastungsbereich eine hohe berechnete Lebensdauer aufweist.

### Bezugszeichenliste

- 1: Rollenkörper
- 2: Stirnseiten
- 3: Drehachse
- 4: Laufflächen
- 5: Gesamtprofilverlauf
- 6: Grundprofilverlauf
- 7: Mittellinie
- 8: Mittelabschnitt
- 9: Endabschnitte
- 10: Korrekturprofilverlauf
- 10 a: Mittellinie, mittlerer Korrekturprofilverlauf
- 10 b: Minimallinie, Korrekturprofilverlauf
- 10 c: Maximallinie, Korrekturprofilverlauf
- 11: Graph
- 12: Graph
- 13: Graph
- 14 a, b: Pressungsverteilung
- 15: Spannungsspitzen
- 16: lokale Maxima
- 17: globales Maximum
- 18: Belastungslinie
- 19: Belastungslinie

## Patentansprüche

1. Rollenkörper (1) für ein Pendelrollenlager, für ein Toroidallager oder für ein Tonnenrollenlager
wobei der Rollenkörper (1) im Bereich möglicher Kontaktflächen mit einer Laufbahn in Richtung seiner Drehachse (3) einen Mittelabschnitt (8) aufweist an den sich beidseitig ein Endabschnitt (9) anschließt,
wobei der Gesamtprofilverlauf (5) des Rollenkörpers in einem Längsschnitt durch die Drehachse (3) durch eine bereichsweise Überlagerung von einem Grundprofilverlauf (6) mit einem Korrekturprofilverlauf (10) gebildet ist,
wobei der Grundprofilverlauf (6) in Form eines Kreisabschnitts mit einem Rollenradius (R) ausgebildet ist, und wobei in dem Bereich der Endabschnitte (9) der Durchmesser (Dw) des Rollenkörpers (1) im Gesamtprofilverlauf (5) durch die Überlagerung des Korrekturprofilverlaufs (10) gegenüber dem Grundprofilverlauf (6) verringert ist,
**dadurch gekennzeichnet, dass**
in dem Mittelabschnitt (8) der Gesamtprofilverlauf (5) dem Grundprofilverlauf (6) entspricht.

2. Rollenkörper (1) nach Anspruch 1, **dadurch gekennzeichnet, dass** sich der Mittelabschnitt (8) über mindestens 50% der Rollenlänge (Lw), vorzugsweise über mindestens 80% der Rollenlänge (Lw) und insbesondere über mindestens über 90% der Rollenlänge (Lw) erstreckt.

3. Rollenkörper (1) nach Anspruch 1 oder 2, **dadurch gekennzeichnet, dass** der Übergang in dem Gesamtprofilverlauf (5) zwischen dem Mittelabschnitt (8) und dem Endabschnitt (9) stetig, differenzierbar und/oder mit einem tangentialen Übergang erfolgt.

4. Rollenkörper (1) nach einem der vorhergehenden Ansprüche, **dadurch gekennzeichnet, dass** der Gesamtprofilverlauf (5) in den Endabschnitten (9) als ein Radiusverlauf oder als ein logarithmischer Verlauf ausgebildet ist.

5. Rollenkörper (1) nach einem der vorhergehenden Ansprüche, **dadurch gekennzeichnet, dass** der Korrekturprofilverlauf (10) so gewählt ist, dass bei einer Normalbelastung des Rollkörpers (1) in einem P/C-Bereich gemäß DIN ISO 281 Beiblatt 2 größer als 0,1, vorzugsweise größer als 0,15 und/oder kleiner als 0,4, vorzugsweise kleiner 0,3 die Druckbelastung im Endabschnitt (9) kleiner oder nicht mehr als 10% größer als die maximale Druckbelastung in dem Mittelabschnitt (8) ist.

6. Rollenkörper (1) nach einem der vorhergehenden Ansprüche, **dadurch gekennzeichnet, dass** der Korrekturprofilverlauf (10) so gewählt ist, dass bei einer Normalbelastung des Wälzkörpers in einem P/C-Bereich gemäß DIN ISO 281 Beiblatt 2 größer als 0,1, vorzugsweise größer als 0,15 und/oder kleiner als 0,4, vorzugsweise kleiner 0,3 die Druckbelastung im Endabschnitt (9) ein lokales Maximum (16) bildet.

7. Rollenkörper (1) nach einem der vorhergehenden Ansprüche, **dadurch gekennzeichnet, dass** die Differenz zwischen dem Gesamtprofilverlauf (5) und dem Grundprofilverlauf (6) in der Mitte der Endabschnitte (8) zwischen 0,002 mm und 0,1 mm, vorzugsweise zwischen 0,008 und 0,03 beträgt und zwar bei einer Rollenlänge (Lw) zwischen 15 mm und 60 mm, insbesondere 400 mm und einem maximalen Rollendurch-messer (Dw) zwischen 10 mm und 40 mm, insbesondere 210 mm.

8. Wälzkörperlager **gekennzeichnet durch** eine Mehrzahl von Rollenkörpern (1) nach einem der vorhergehenden Ansprüche.

9. Wälzkörperlager nach Anspruch 8, gekennzeichnet als Pendelrollenlager, Toroidallager oder Tonnenrollenlager, wobei mindestens eine der Laufbahnen des Wälzkörperlagers in einem Schnitt senkrecht zur Laufrichtung der Rollenkörper (1) als Kreisabschnitt mit einem Laufbahnradius ausgebildet ist, wobei das Verhältnis von Rollenradius (R) zu Laufbahnradius - nachfolgend auch als Schmiegung bezeichnet - zwischen 0,9 und 1 beträgt.

10. Wälzkörperlager nach Anspruch 8 oder 9, **dadurch gekennzeichnet dass** die Schmiegung für mindestens eine Laufbahn größer als 0,98, vorzugsweise größer als 0,99 ausgebildet ist.

11. Wälzkörperlager nach einem der Ansprüche 8 bis 10, gekennzeichnet als zwei- oder mehrreihiges Lager.
